# EUROPÄISCHE PATENTSCHRIFT

(11) **EP 2 081 991 B1**
(45) Veröffentlichungstag und Bekanntmachung des Hinweises auf die Patenterteilung: **29.09.2010**
(21) Anmeldenummer: 07818765.5
(22) Anmeldetag: 06.10.2007
(51) Int. Cl.: C08L 23/10, C08L 23/26, F41J 13/00

(54) **GESCHOSSFANGMASSE MIT VERBESSERTEM ABFANGVERHALTEN FÜR GESCHOSSPROJEKTILE**
PROJECTILE TRAP MATERIAL WITH IMPROVED TRAPPING BEHAVIOR FOR PROJECTILES
MATÉRIAU DE PIÈGE À BALLES AYANT DES PROPRIÉTÉS AMÉLIORÉES D'ARRÊT DES PROJECTILES D'ARMES À FEU

(30) Priorität: 17.10.2006 DE 102006048893
(43) Veröffentlichungstag der Anmeldung: 29.07.2009
(73) Patentinhaber: Clariant Finance (BVI) Limited, Road Town, Tortola (VG)
(72) Erfinder: KOVANETZ, Franz, 86356 Neusaess (DE); FELL, Rainer, 86368 Gersthofen (DE); DIEM, Hermann, 86517 Wehringen (DE); MAYR, Josef, 86684 Holzheim (DE)
(74) Vertreter: Jacobi, Carola
(86) Internationale Anmeldenummer: PCT/EP2007/008689
(87) Internationale Veröffentlichungsnummer: WO 2008/046534

(56) Entgegenhaltungen:
- EP-A- 0 518 330
- WO-A-2004/104128
- DE-A1- 4 234 457

## Beschreibung

Die Erfindung betrifft eine Geschossfangmasse, die zum Abbremsen und Auffangen von Projektilen in Geschossfangvorrichtungen Verwendung findet, oder die direkt in Form selbsttragender Formkörper zum Abbremsen und Auffangen von Geschossen verwendet wird.

Geschossfangmassen, die zum Auskleiden von Geschossfängen oder von ganzen Schießständen dienen, sollten gleichzeitig mehreren Bedingungen genügen. Sie müssen zum einen in der Lage sein, Geschosse möglichst elastisch abzufangen, d.h. die kinetische Energie der Geschosse aufzunehmen und die Geschosse dabei so abzubremsen, dass der hinter der Geschossfangmasse liegende Aufbau oder Geschossfang nicht beschädigt wird und dass Rückpraller und Querschläger möglichst vollständig ausgeschlossen werden. Weil bei dem Beschuss von Materialen durch Abrieb und/oder Zerlegung der Schwermetallprojektile Schadstoffe in Form von Dämpfen und Stäuben freigesetzt werden können, soll durch die Verwendung spezieller Materialen die Freisetzung von Schwermetallen möglichst verhindert und die dennoch inhärent entstehenden Emissionen möglichst wirkungsvoll gebunden werden. Ferner soll die Geschossfangmasse dem Beschuss mit Projektilen über möglichst lange Zeit standhalten bevor sie zur Erneuerung ausgetauscht werden muss. Ferner sollen die eingesetzten Massen einfach zu recyclieren sein, damit diese auch wieder einsetzbar sind. Dies schließt auch das Recycling des Bleis der Geschosse ein, die einfach von der Geschossfangmasse abgetrennt werden können müssen.

Es sind Geschossfangmassen bekannt, die aus gummielastischen, unter Umständen mehrschichtigen Materialien bestehen. Die gummielastischen Materialien haben den Nachteil, dass sie bei bestimmten Kalibern aufgrund ihrer starken Elastizität zu Rückprallern neigen und dass die Struktur eines verletzten Gummis unter weiter andauerndem Beschuss dauerhaft zerstört wird, so dass die Masse an jeder Schussstelle unbrauchbar wird und relativ schnell ausgetauscht werden muss.

Aus DE 32 12 781 sind Geschossfangmittel aus Abfallgummigranulat bekannt, das mit einem Kunstharz gebunden ist. Aus DE 34 42 984 sind

Geschossfangmaterialien aus Kautschuk, Kautschukregenerat und Elastomeren bekannt.

Es sind Schmelzmassen bekannt, die eine Eigenstandfestigkeit haben, dass die Masse frei als Beschichtung oder Formkörper in bzw. auf dem Geschossfang hält ohne zu fließen. Bei den Schmelzmassen schließt sich der Schusskanal durch die Wärmeentwicklung beim Eindringen von Geschossen jeweils hinter dem Geschoss, was eine häufige Beschießbarkeit sichert. Hierzu sind Mischungen verschiedener Polymere notwendig. In EP 0369401 werden Vorrichtungen aus thermoplastischem Kunststoff und Mischungen mit Weichmachern beschrieben, wobei man das verbrauchte Material der Vorrichtung durch Ausschmelzen reinigt. EP 0 518 330 beschreibt spezielle Massen aus ataktischem Polypropylen, Polyisobutylen und einem Kohlenwasserstoffharz bzw. natürlichem Harz. Schließlich werden in DE 4 234 457 Mischungen aus amorphem Polyolefin (APO)-Mischpolymer, Terpenharz und Polyisobutylen beschrieben. Allerdings sind diese Mischungen so weich, dass sie zum vollständigen Abbremsen der Projektile an der Rückwand Stahlbleche benötigen.

Es war daher Aufgabe der Erfindung, Geschossfangmassen zur Verfügung zu stellen, die auch ohne Abmischung mit Harzen und anderen Stoffen als effektive Geschossfangmassen mit definierten Eigenschaften eingesetzt werden können. Schon als Reinstoffe soll man je nach molekularer Beschaffenheit der Massen gezielt Unterschiede im Abbremsverhalten von Projektilen verwirklichen können, so dass sowohl der Einsatz als Formkörper in der Front der Geschossfangsysteme möglich sein soll und sich dabei gute Geschossfangeigenschaften, wie selbsttätiger Verschluss des Schusskanals, Sicherheit gegen Abpraller und Querschläger, häufige Beschießbarkeit, gute Schadstoff-Rückhaltfähigkeit und einfache Recyclierbarkeit verwirklichen lassen sollen, andererseits aber auch Materialen zur Verfügung stehen, die zum vollkommenen Stoppen der Projektile in Formkörpern an der Hinterseite der Geschossfangsysteme geeignet sind.

Die Lösung der vorliegenden Aufgabe konnte überraschend durch eine Geschossfangmasse erreicht werden, die 10 bis 100 Gew.-% Metallocen-Polyolefinwachs und/oder dessen Derivate enthält. Die erfindungsgemäße Geschossfangmasse besitzt eine hohe Durchlässigkeit für Geschossprojektile mit Selbstheilverhalten und sie bewirkt im System von verschiedenen Platten und teilweise zusätzlich einer Strecke aus Geschossfangmassengranulat die vollständige Abbremsung von auftreffenden Projektilen.

Die in der erfindungsgemäßen Geschossfangmasse enthaltenen Metallocen-Polyolefinwachse sind definitionsgemäß Wachse, die in Gegenwart von Metallocen als Katalysator aus Olefinen, vorzugsweise aus Propylen, durch Polymerisation hergestellt werden. Die Synthese der Metallocen-Polyolefinwachse kann unter einem Druck von 0,1 bis 10 MPa in Gasphase oder in Suspension oder in Lösung in einem geeigneten Suspendier-/Lösungsmittel nach bekannten Technologien erfolgen. Die in der erfindungsgemäßen Geschossfangmasse enthaltenen Metallocen-Polyolefinwachse sind dabei keine typischen Wachse, die durch Eigenschaften wie fest und spröde hart, grob- bis feinkristallin, durchscheinend bis opak und bei 20°C knetbar charakterisiert sind. Dagegen haben die enthaltenen Metallocen-Polyolefinwachse elastische, nichtspröde Eigenschaften, haben zum Großteil amorphen Charakter, sind transparent bis durchscheinend.

Die erfindungsgemäße Geschossfangmasse besitzt überraschend hervorragende Temperatureigenschaften, die einen Beschuss in Außen-Schiessanlagen, insbesondere bei tiefen Temperaturen, ermöglicht. Die Masse ist auch von hoher Schlagfestigkeit und Zähigkeit. Durch die hohe Eigenelastizität der Masse werden die Geschossprojektile aufgefangen, ohne dass sie wesentlich zerstört werden. Das trifft auch für Geschosse mit Mannstopwirkung zu, welche bei anderen, nicht erfindungsgemäßen Geschossfangmassen zu erheblichen Schäden in der Frontplatte führen.

Eine Freisetzung von Schadstoffen wird verhindert, in dem das Abbremsen gerade so langsam geschieht, das durch die geringe Erwärmung kein Blei verdampft. Dennoch von der Munition freigesetzte Schadstoffe, z.B. durch Abrieb und/oder Zerlegung der Schwermetallprojektile, werden physikalisch durch Rückhaltung in dem elastischen Material und durch Absorption in der bei Beschuss erweichten Masse zurückgehalten, so dass keine Schadstoffe in die dem Geschossfangsystem angrenzenden Materialen/Luft gelangen. Die erfindungsgemäße Geschossfangmasse zeichnet sich daher auch durch eine hohe Umweltfreundlichkeit aus.

Durch die Wärmeentwicklung beim Eindringen eines Geschossprojektils wird die Masse in der unmittelbaren Umgebung des Geschossprojektils angeschmolzen, wodurch sich der Einschusskanal weitgehend selbsttätig wieder verschließt. Dennoch behalten Formkörper aus der erfindungsgemäßen Geschossfangmasse ihre äußere Geometrie und Standfestigkeit bei, da sich der Schmelzvorgang nur auf die unmittelbare Umgebung des Geschossprojektils erstreckt. Die Elastizität der erfindungsgemäßen Geschossfangmasse ist gerade so, dass Abpraller und Querschläger mit nahezu vollständiger Sicherheit vermieden werden können.

Die Geschossfangmasse kann recycelt werden, in dem das Material geschmolzen wird und die Geschosse durch Sedimentation oder/und Filtration getrennt werden. Die gesammelten Geschosse können so einem Recycling der enthaltenen Schwermetalle zugeführt werden. Die gereinigte Schmelze der Geschossfangmassen kann dann wieder in Platten gegossen werden und von neuem als Geschossfangmasse eingesetzt werden.

Vorzugsweise besitzt das in der erfindungsgemäßen Geschossfangmasse enthaltene Metallocen-Polyolefinwachs, einen Tropfpunkt im Bereich zwischen 70 und 160 °C. Die Viskosität der Schmelze liegt bei einer Temperatur von 170 °C im Bereich zwischen 20 und 40 000 mPa·s.

Besonders vorteilhafte Eigenschaften wurden gefunden, wenn das Metallocen-Polyolefinwachs ein Propylenwachs ist.

In bevorzugter Weiterbildung der Erfindung besteht das Metallocen-Polyolefinwachs aus einem Copolymer aus Propylen und Ethylen, das einen Tropfpunkt im Temperaturbereich zwischen 80 und 130 °C und eine Schmelzviskosität bei 170 °C im Bereich von 50 bis 30 000 mPa·s besitzt

In einer bevorzugten Ausführungsform der Erfindung enthält die Geschossfangmasse
a) Metallocen-Polyolefinwachs und/oder Derivate davon, vorzugsweise Metallocen-Polypropylenwachs,
b) gegebenenfalls bis zu 90 Gew.-% eines weiteren Wachses oder Harzes,
c) gegebenenfalls bis zu 5 Gew.-% eines Antioxidans,
d) gegebenenfalls bis zu 5 Gew.-% eines Lichtschutzmittels,
e) gegebenenfalls bis zu 50 Gew.-% eines Flammschutzmittels,
f) gegebenenfalls bis zu 50 Gew.-% eines pulverförmigen, im Metallocen-Polyolefinwachs unlöslichen Füllstoffes und
g) gegebenenfalls bis zu 10 Gew.-% eines färbenden Stoffes z.B. ein Pigment oder einen löslichen Farbstoff.

Als Metallocen-Polyolefinwachse kommen vorzugsweise Homopolymerisate des Propylens oder Copolymerisate des Propylens mit Ethylen oder mit einem oder mehreren 1-Olefinen in Frage. Als 1-Olefine werden vorzugsweise lineare oder verzweigte Olefine mit 4 bis 18 C-Atomen, besonders bevorzugt 4 bis 6 C-Atomen, eingesetzt. Beispiele hierfür sind 1-Buten, 1-Hexen, 1-Octen oder 1-Octadecen, weiterhin Styrol. In einer besonders bevorzugten Ausführungsform der Erfindung sind die Metallocen-Polyolefinwachse Homopolymerisate des Propylens. In einer weiteren besonders bevorzugten Ausführungsform der Erfindung sind die Metallocen-Polyolefinwachse Copolymere des Propylens mit Ethylen. Die aus Propylen gebildeten Copolymeren bestehen vorzugsweise zu 70 bis 99,9 Gew.-%, besonders bevorzugt zu 80 bis 99 Gew.-%, aus Struktureinheiten abgeleitet von Propylen.

Besonders gut geeignet sind Metallocen-Polyolefinwachse mit einem Tropfpunkt im Temperaturbereich zwischen 70 und 160°C, bevorzugt zwischen 80 und 130 °C, einer Schmelzviskosität bei 170 °C zwischen 20 und 40 000 mPa·s, bevorzugt zwischen 50 und 30 000 mPa·s, ganz besonders bevorzugt von 100 bis 7 000 mPa·s, und einer Dichte bei 20 °C zwischen 0,85 und 0,98 g/cm³, bevorzugt zwischen 0,87 und 0,94 g/cm³. Die in der erfindungsgemäßen Geschossfangmasse enthaltenen Metallocen-Polyolefinwachse haben eine Mindestzugfestigkeit von 4 N/mm² bei einer Bruchdehnung von mindestens 10 %. Sie sind undurchsichtig, opak oder auch transluzent, bis durchsichtig.

Werden die Metallocen-Polyolefinwachse nicht zu Geschossfangsystemen verarbeitet, dann können auch Halbzeuge wie Platten, Folien, Granulat oder Profile aus den Metallocen-Polyolefinwachsen zum Einsatz kommen.

Metallocenkatalysatoren zur Herstellung der Polyolefinwachse sind chirale oder nichtchirale Übergangsmetallverbindungen der Formel M1Lx. Die Übergangsmetallverbindung M1Lx enthält mindestens ein Metallzentralatom M1, an das mindestens ein π-Ligand, z.B. ein Cyclopentadienylligand, gebunden ist. Darüber hinaus können Substituenten, wie z.B. Halogen-, Alkyl-, Alkoxy- oder Arylgruppen an das Metallzentralatom M1 gebunden sein. M1 ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, so genannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z.B. beschrieben in EP-632 063.

Beispiele für allgemeine Strukturformeln von Metallocenen sowie für deren Aktivierung mit einem Cokatalysator sind u.a. in EP-571 882 gegeben.

Für die erfindungsgemäße Geschossfangmasse geeignet sind weiterhin polar modifizierte Metallocen-Polyolefinwachse.

Die Modifizierung von Metallocen-Polyolefinwachsen kann durch Anfügen von organischen bzw. anorganischen Gruppen geschehen, die 0 bis 500 C-Atome und 0 bis 200 Hetero-Atome enthalten, wobei es sich bei den Hetero-Atomen um Sauerstoff, Phosphor, Schwefel, Silicium, Halogene und Stickstoff als tertiärer Stickstoff handelt.

Die polare Modifizierung dieser Metallocen-Polyolefinwachse kann auch durch Oxidation mit Sauerstoff oder sauerstoffhaltigen Gasen unter- oder oberhalb des Schmelzpunkts erfolgen. Vorzugsweise wird dabei das Wachs im schmelzflüssigen Zustand bei Temperaturen zwischen dem Schmelzpunkt des Wachses und 200 °C durch Einleiten von Sauerstoff oder Sauerstoff enthaltenden Gasen, bevorzugt Luft, oxidiert. Die durch Oxidation modifizierten Wachse weisen Säurezahlen zwischen 0,1 und 100, bevorzugt zwischen 1 und 30 mg KOH/g, Schmelzviskositäten, gemessen bei 170 °C, im Bereich von 5 bis 10 000 mPa·s, bevorzugt von 20 bis 5 000 mPa·s, und Tropfpunkte im Temperaturbereich von 80 bis 160 °C auf.

Geeignet sind auch Derivate solcher Oxidate, wie sie etwa durch deren Veresterung mit ein- oder mehrwertigen aliphatischen oder aromatischen Alkoholen, z.B. Ethanol, Propanolen, Butanolen, Ethandiol, Butandiolen, Glycerin, Trimethylolpropan, Pentaerythrit oder Benzylalkohol, hergestellt werden können. Auch ist im Falle, dass Partialester vorliegen, die weitere Derivatisierung solcher Ester etwa durch Veresterung mit Säurekomponenten wie Acrylsäure oder Methacrylsäure möglich.

Eine weitere Möglichkeit der polaren Modifizierung besteht in der Umsetzung des Metallocen-Polyolefinwachses mit alpha-beta-ungesättigten Carbonsäuren oder deren Derivaten, gegebenenfalls in Gegenwart eines Radikalstarters. Als Beispiele für α,β-ungesättigte Carbonsäuren seien genannt Acrylsäure, Methacrylsäure, Crotonsäure sowie Maleinsäure. Als Beispiele für Derivate von α,β-ungesättigten Carbonsäuren seien deren Ester oder Amide bzw. Anhydride, z.B. Acrylsäurealkylester, Acrylsäureamide, Halb- oder Diester der Maleinsäure, Maleinsäureanhydrid oder Amide der Maleinsäure wie z.B. Maleinimid oder N-Alkyl-substituierte Maleinimide genannt. Es können auch Gemische dieser Verbindungen verwendet werden. Bevorzugt sind Maleinsäure und ihre Abkömmlinge, besonders bevorzugt ist Maleinsäureanhydrid. Die α,β-ungesättigte Carbonsäuren bzw. ihre Derivate kommen in einer Menge, bezogen auf eingesetztes Metallocen-Polyolefinwachs, von 0,1 bis 20 Gew.-% zum Einsatz. Die Herstellung solcher radikalisch erzeugten polaren Umsetzungsprodukte ist bekannt und beispielsweise in EP 0 941 257 beschrieben. Die durch Umsetzung von Metallocen-Polyolefinwachsen mit α,β-ungesättigten Carbonsäuren und deren Derivaten weisen Schmelzviskositäten, gemessen bei 170 °C, im Bereich von 5 bis 10 000 mPa·s, bevorzugt von 10 bis 5 000 mPa·s, Verseifungszahlen von 0,1 bis 100 mg KOH/g, bevorzugt 2 bis 80 mg KOH/g, und Tropfpunkte im Temperaturbereich von 80 bis 160 °C, bevorzugt von 100 bis 155 °C, auf.

In einer bevorzugten Ausführungsform besteht das in der erfindungsgemäßen Geschossfangmasse enthaltene Material ausschließlich aus einem oder mehreren Metallocen-Polyolefinwachsen und/oder deren Derivaten.

In einer weiteren bevorzugten Ausführungsform besteht das in der erfindungsgemäßen Geschossfangmasse enthaltene Material aus einem oder mehreren Metallocen-Polyolefinwachsen und/oder deren Derivaten und weiteren Substanzen. Sofern weitere Substanzen in diesem Material enthalten sind, liegt der Anteil des einen oder der mehreren Metallocen-Polyolefinwachse und/oder deren Derivate, bezogen auf das gesamte Material, vorzugsweise im Bereich von 0,1 bis 100 Gew.-%, besonders bevorzugt von 50 bis 100 Gew.-% und insbesondere bevorzugt von 80 bis 100 Gew.-%.

Nach Bedarf kann die Geschossfangmasse auch andere Wachse aus der Gruppe der natürlichen Wachse, der teilsynthetischen oder vollsynthetischen Wachse enthalten. Geeignete Wachse haben einen Schmelzpunkt zwischen 40 und 160 °C, bevorzugt 80 bis 140 °C, und eine Schmelzviskosität im Bereich von 20 bis 10 000 mPa·s, bevorzugt von 20 bis 6 000 mPa·s. Bevorzugte Vertreter solcher Wachse sind Carnaubawachse, Candelillawachse, Bienenwachs, Montanwachse, Paraffine, mit Ziegler-Katalysatoren hergestellte Polyolefinwachse und Fischer-Tropsch-Wachse.

Sofern andere Wachse als Metallocen-Polyolefinwachse oder Harze in der erfindungsgemäßen Geschossfangmasse enthalten sind, ist ihr gemeinsamer Anteil, bezogen auf das Gesamtgewicht der Geschossfangmasse, bis zu 90 Gew.-% und vorzugsweise von 0 bis 50 Gew.-%.

Ebenso können Harze mit natürlichem oder synthetischem Ursprung in der Geschossfangmasse aus Metallocen-Polyolefinwachs enthalten sein. Geeignete Harze schmelzen in einem Temperaturbereich von 40 bis 200 °C und haben im geschmolzenen Zustand eine Schmelzviskosität von 10 bis zu 1 000 mPa·s. Bevorzugte Vertreter sind Kohlenwasserstoffharze, Harze auf Basis Abietinsäure, Baumharze und auch synthetische Harze wie Acrylharze, Ethylenvinylacetatharze, Polycyclopentadienharze und auch wasserlösliche Harze wie Ethylenoxidaddukte oder Polyvinylalkohole.

In der Geschossfangmasse können auch Antioxidantien enthalten sein. Diese sind bevorzugt ausgewählt aus der Gruppe der Phenole oder Phosphorverbindungen.

Sofern Antioxidantien in der Geschossfangmasse enthalten sind, ist ihr Anteil, bezogen auf die gesamte Geschossfangmasse, bis zu 10 Gew.-% und vorzugsweise von 0,3 bis 3 Gew.-%.

In der Geschossfangmasse können auch Lichtschutzmittel enthalten sein. Diese sind bevorzugt ausgewählt aus der Gruppe der HALS-Verbindungen (= Hindered Amine Light Stabilizers).

Sofern Lichtschutzmittel in der Geschossfangmasse enthalten sind, ist ihr Anteil, bezogen auf die gesamte Geschossfangmasse, bis zu 10 Gew.-% und vorzugsweise von 0,1 bis 3 Gew.-%.

In der Geschossfangmasse können auch Flammschutzmittel enthalten sein. Sofern Flammschutzmittel in der Geschossfangmasse enthalten sind, ist ihr Anteil, bezogen auf die gesamte Geschossfangmasse, bis zu 50 Gew.-% und vorzugsweise von 5 bis 25 Gew.-%.

In der Geschossfangmasse können auch pulverförmige, im Metallocen-Polyolefinwachs unlösliche Füllstoffe enthalten sein. Diese sind bevorzugt ausgewählt aus der Gruppe der Oxide, Silikate, wie Sand, Kieselsäure und Tone, Carbonate, wie Kalk, und organischen Füllstoffen mit einer Zersetzungstemperatur von über 180 °C und einem Schmelzpunkt von über 160 °C wie z.B. Holzmehl, Polystyrol, Polyamid und Polytetrafluorethylen (PTFE).

Sofern derartige Füllstoffe in der Geschossfangmasse enthalten sind, ist ihr Anteil, bezogen auf die gesamte Geschossfangmasse, bis zu 50 Gew.-% und vorzugsweise von 10 bis 45 Gew.-%.

In der Geschossfangmasse können auch färbende Stoffe wie z.B. Pigmente oder lösliche Farbstoffe enthalten sein. Diese sind bevorzugt ausgewählt aus der Gruppe bestehend aus organischen und anorganischen Pigmenten sowie Fettfarbstoffen.

Sofern derartige färbende Stoffe in der Geschossfangmasse enthalten sind, ist ihr Anteil, bezogen auf die gesamte Geschossfangmasse, bis zu 5 Gew.-% und vorzugsweise von 0,1 bis 3 Gew.-%.

Die Erfindung wird durch die nachstehenden Beispiele erläutert, ohne sie darauf einzuschränken.

### Beispiele:

Beispiele für die Metallocen-Polyolefinwachse, die vorteilhaft in den Geschossfangmassen der hier vorgestellten Erfindung eingesetzt werden können sind:
Metallocen-Polypropylen-Wachse
TP Licocene^{®} PP 1302 (Polypropylenwachs, gekennzeichnet durch eine Schmelzviskosität von 200 mPa·s bei 170 °C und einen Tropfpunkt von ca. 90 °C) TP Licocene^{®} PP 1502 (Polypropylenwachs, gekennzeichnet durch eine Schmelzviskosität von 1 800 mPa·s bei 170 °C und einen Tropfpunkt von ca. 90 °C) TP Licocene^{®} PP 1602 (Polypropylenwachs, gekennzeichnet durch eine Schmelzviskosität von 7 000 mPa·s bei 170 °C und einen Tropfpunkt von ca. 90 °C) TP Licocene^{®} PP 2602 (Polypropylenwachs, gekennzeichnet durch eine Schmelzviskosität von 6 000 mPa·s bei 170 °C und einen Tropfpunkt von ca. 100°C)
TP Licocene^{®} PP 3502 (Polypropylenwachs, gekennzeichnet durch eine Schmelzviskosität von 1 800 mPa·s bei 170 °C und einen Tropfpunkt von ca. 110°C)
TP Licocene^{®} PP MA 1332 (Maleinsäureanhydridgepfropftes Polypropylenwachs, gekennzeichnet durch eine Schmelzviskosität von 300 mPa·s bei 170 °C und einen Tropfpunkt von ca. 85 °C und eine Säurezahl von 18 mg KOH/g)
Hersteller der vorgenannten Wachse ist die Clariant Produkte Deutschland GmbH.

### Beispiel 1

Es wurde eine Geschossfangmasse durch Giessen von Platten aus TP Licocene^{®} PP 1602 hergestellt. Abmaße der Platten betrugen ca. 70 x 70 x 5 cm.

Charakterisiert wird das Material durch eine Schmelzviskosität von 7 000 mPa·s bei 170 °C und einen Tropfpunkt von ca. 90 °C.

Die erhaltenen Formteile aus der Geschossfangmasse zeigen als Reinstoff und ohne Abmischung mit anderen Stoffen entsprechend gute Schlagfestigkeit und Zähigkeit.

Mechanische Prüfungen an Normprüfkörpern ergaben folgende Messwerte:

| | |
|---|---|
| Zug-Emodul nach ISO 527: | 50 MPa |
| Streckspannung nach ISO 527: | 4 MPa |
| Streckdehnung nach ISO 527: | 17 % |
| Bruchspannung nach ISO 527: | 4 MPa |
| Bruchdehnung nach ISO 527: | 620 % |
| Kugeldruckhärte (10kg, 5mm, 5min): | 5 MPa |
| Fließhärte: | 510 bar |
| Shorhärte (ISO 868): | D 25 |

### Beispiel 2

Es wurde eine Geschossfangmasse hergestellt durch Giessen von Platten aus TP Licocene^{®} PP 2602. Abmaße der Platten betrugen ca. 70 x 70 x 5 cm.

Charakterisiert wird das Material durch eine Schmelzviskosität von 6 000 mPa·s bei 170 °C und einen Tropfpunkt von ca. 100 °C.

Die erhaltenen Formteile aus der Geschossfangmasse zeigen als Reinstoff und ohne Abmischung mit anderen Stoffen entsprechend gute Schlagfestigkeit und Zähigkeit.

Mechanische Prüfungen an Normprüfkörpern ergaben folgende Messwerte:

| | |
|---|---|
| Zug-Emodul nach ISO 527: | 150 MPa |
| Streckspannung nach ISO 527: | 8 MPa |
| Streckdehnung nach ISO 527: | 16 % |
| Bruchspannung nach ISO 527: | 9 MPa |
| Bruchdehnung nach ISO 527: | 690 % |
| Kugeldruckhärte (10kg, 5mm, 5min): | 9 MPa |
| Fließhärte: | 970 bar |
| Shorhärte (ISO 868): | D 40 |

### Beispiel 3

Es wurde eine Geschossfangmasse hergestellt durch Giessen von Platten aus TP Licocene^{®} PP 1502. Abmaße der Platten betrugen ca. 70 x 70 x 5 cm.

Charakterisiert wird das Material durch eine Schmelzviskosität von 1 800 mPa·s bei 170 °C und einen Tropfpunkt von ca. 90 °C,

Die erhaltenen Formteile aus der Geschossfangmasse zeigen gute Schlagfestigkeit und Zähigkeit.

### Beispiel 4

Es wurde ein mehrschichtiger Geschossfangaufbau hergestellt bestehend aus Platten unterschiedlich abbremsender Licocene^{®}-Typen, wie zum Beispiel Licocene^{®} PP 1502 und Licocene^{®} PP 1602.

Hierbei wurden je nach Kaliber ein, zwei oder mehrere 3 bis 6 cm starke Platten aus Licocene^{®} PP 1602 eingesetzt, um die auftreffenden Projektile in der Geschwindigkeit abzubremsen. Die Geschosse durchdringen je nach verwendetem Kaliber eine gewisse Anzahl an Platten, werden dabei abgebremst und fallen vor dem Eindringen in die nächste Platte zwischen den Platten nieder. Als abschließende hintere Scheibe des Systems wurde eine 6 cm starke Platte aus Licocene^{®} PP 1502 eingesetzt, um den Rest an kinetischer Energie aufzunehmen und eine endgültige Abbremsung der Projektile zu erreichen, falls diese vom Geschoss erreicht wird.

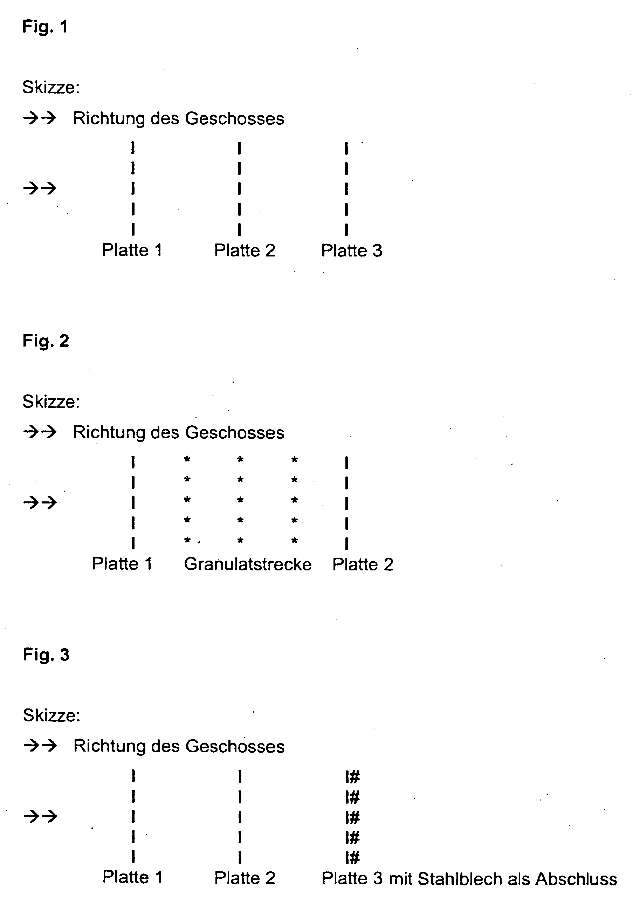

Die Ausführungsform des Geschossfangaufbaus nach Beispiel 4 wird anhand der Zeichnung näher erläutert: Fig. 1 zeigt die Ausführungsform der Erfindung nach Beispiel 4 in schematischer Darstellung und von der Seite gesehen mit mehreren, in dem Fall drei, hintereinander angeordneten Platten.

### Beispiel 5

Ähnlich Beispiel 4 wurde ein Geschossfangaufbau mit Granulat aus Licocene^{®} in der Mittelposition zwischen zwei ca. 5 bis 6 cm starken Platten aus Licocene^{®} hergestellt, um über eine variable Länge der Abbremsstrecke geeignete Geschossfangsysteme für verschiedene Kaliber zu testen. Dabei folgte auf eine Platte aus Licocene^{®} PP 1602 über eine Länge von 20 bis 50 cm eine Füllung aus Licocene^{®} PP 1602-Granulat. Abschließend wurde eine 6 cm starke Platte aus Licocene^{®} PP 1502 eingesetzt, um auch solche Projektile zu stoppen, die noch nicht all ihre kinetische Energie im Verlauf der Granulatstrecke abgegeben hatten.

Die Ausführungsform des Geschossfangaufbaus nach Beispiel 5 wird anhand der Zeichnung näher erläutert: Fig. 2 zeigt die Ausführungsform nach Beispiel 5 in schematischer Darstellung von der Seite gesehen mit zwei Platten zwischen denen eine bestimmte Strecke mit Granulat angefüllt ist.

### Beispiel 6

Vorrichtung mit zusätzlichem Abschluss-Blech als Abschluss. Ähnlich wie in Beispiel 4 wurde ein Geschossfangaufbau mit ein bis zwei 6 cm starken Platten aus Licocene^{®} PP 1602 eingesetzt, um die auftreffenden Projektile in der Geschwindigkeit abzubremsen. Als abschließende hintere Scheibe des Systems wurde eine 6 cm starke Platte aus Licocene^{®} PP 1502 eingesetzt, als deren rückseitiger Abschluss ein Stahlblech angebracht wurde. So sollte sichergestellt werden, dass auch beim Einsatz unterschiedlichster Kaliber der Rest an kinetischer Energie aufgenommen wird und eine endgültige Abbremsung der Projektile innerhalb des Geschossfangaufbaus erreicht wird.

Die Ausführungsform des Geschossfangaufbaus nach Beispiel 6 wird anhand der Zeichnung näher erläutert: Fig. 3 zeigt die Ausführungsform nach Beispiel 6 in schematischer Darstellung von der Seite gesehen, umfassend drei hintereinander angeordnete Platten und ein Stahlblech als rückseitigem Abschluss.

### Bespiel 7

Nachdem der Geschossfangaufbau durch die Beschüsse mit vielen Geschossen beladen ist, wird das Material recycled, indem das Granulat durch Aufschlämmen in Wasser vom Geschossmaterial abgetrennt wird. Dabei schwimmt das Licocene^{®} auf dem Wasser auf, da es eine geringere Dichte als Wasser hat. Die Geschosse setzen sich ab und werden abgetrennt und ebenso einem Recycling zugeführt. Das Licocene^{®} wird entweder wieder als Granulat eingesetzt.

### Beispiel 8

Nachdem der Geschossfangaufbau durch die Beschüsse mit vielen Geschossen beladen ist, wird das Material recycled, indem die Platten und das Granulat, soweit nicht abgetrennt wie in Beispiel 6 beschreiben, aufgeschmolzen wird und durch Filtrieren die Geschosse abgetrennt werden. Die Geschosse werden so abgetrennt und einem Recycling zugeführt. Das geschmolzene Licocene^{®} wird wieder zu Platten vergossen oder granuliert und kann so wieder zum Aufbau des Geschossfanges dienen.

## Patentansprüche

1. Geschossfangmasse für das Abfangen von Geschossprojektilen, enthaltend 10 bis 100 Gew.-% Metallocen-Polyolefinwachs, bezogen auf das Gesamtgewicht der Geschossfangmasse.

2. Geschossfangmasse nach Anspruch 1, **dadurch gekennzeichnet, dass** das Metallocen-Polyolefinwachs ein Homopolymerisat des Propylens oder ein Copolymerisat des Propylens mit Ethylen oder mit einem oder mehreren 1-Olefinen mit 4 bis 18 C-Atomen ist.

3. Geschossfangmasse nach Anspruch 1 oder 2, **dadurch gekennzeichnet, dass** sie zusätzlich eine Menge von 0 bis 90 Gew.-% Zusatz- und Hilfsstoffe enthält.

4. Geschossfangmasse nach einem oder nach mehreren der Ansprüche 1 bis 3, **dadurch gekennzeichnet, dass** sie Metallocen-Polyolefinwachs in einer Menge im Bereich von 90 bis 100 Gew.-% enthält.

5. Geschossfangmasse nach einem oder nach mehreren der Ansprüche 1 bis 4, **dadurch gekennzeichnet, dass** das Metallocen-Polyolefinwachs einen Tropfpunkt im Temperaturbereich zwischen 80 und 150 °C und eine Schmelzviskosität im Bereich von 20 bis 40 000 mPa·s hat, gemessen bei 170 °C.

6. Geschossfangmasse nach einem oder nach mehreren der Ansprüche 1 bis 5, **dadurch gekennzeichnet, dass** das Metallocen-Polyolefinwachs einen Tropfpunkt im Temperaturbereich zwischen 85 und 115 °C und eine Schmelzviskosität im Bereich von 100 bis 7 000 mPa·s hat, gemessen bei 170 °C.

7. Geschossfangmasse nach einem oder nach mehreren der Ansprüche 1 bis 6, **dadurch gekennzeichnet, dass** sie zusätzlich auch andere Wachse, Harze, Antioxidantien, Lichtschutzmittel, Flammschutzmittel, Füllstoffe, Pigmente und Farbstoffe enthält.

8. Geschossfangmasse nach einem oder nach mehreren der Ansprüche 1 bis 7, **dadurch gekennzeichnet, dass** das Metallocen-Polyolefinwachs wenigstens teilweise funktionalisiert ist, vorzugsweise durch Oxidation oder durch Funktionalisierung mit alpha-beta-ungesättigten Carbonsäuren.

9. Geschossfangmasse nach einem oder nach mehreren der Ansprüche 1 bis 8, **dadurch gekennzeichnet, dass** das Metallocen-Polyolefinwachs wenigstens teilweise mit Maleinsäureanhydrid gepfropft ist.

10. Geschossfangmasse nach einem oder nach mehreren der Ansprüche 1 bis 9, **dadurch gekennzeichnet, dass** das Metallocen-Polyolefinwachs wenigstens teilweise über funktionale Gruppen vernetzt ist.

11. Verwendung einer Geschossfangmasse nach einem oder nach mehreren der Ansprüche 1 bis 10 als Frontscheibe in Geschossfangsystemen oder als Sicherheitsaufbau gegen Abpraller und gegen Querschläger.

12. Verwendung nach Anspruch 11 als Abfangmaterial für Geschossprojektile mit verbesserter Schadstoff-Rückhaltfähigkeit.

13. Verwendung nach Anspruch 11 oder 12 als Material zum vollkommenen Stoppen von Geschossprojektilen im rückseitigen Bereich von Geschossfangsystemen.

14. Verfahren zum Recyclieren einer Geschossfangmasse nach einem oder nach mehreren der Ansprüche 1 bis 9, **dadurch gekennzeichnet, dass** diese durch Aufschlämmung in Wasser oder durch Aufschmelzen und Filtrieren von den abgebremsten Geschossen abgetrennt wird und wieder in Geschossfangsystemen eingesetzt werden kann.

## Claims

1. A projectile trap composition for trapping fired projectiles, comprising 10% to 100% by weight of metallocene polyolefin wax, based on the total weight of the projectile trap composition.

2. The projectile trap composition as claimed in claim 1, wherein the metallocene polyolefin wax is a homopolymer of propylene or a copolymer of propylene with ethylene or with one or more 1-olefins having 4 to 18 carbon atoms.

3. The projectile trap composition as claimed in claim 1 or 2, further comprising from 0% to 90% by weight of additive and/or auxiliary materials.

4. The projectile trap composition as claimed in one or more of claims 1 to 3, comprising metallocene polyolefin wax in an amount ranging from 90% to 100% by weight.

5. The projectile trap composition as claimed in one or more of claims 1 to 4, wherein the metallocene polyolefin wax has a drop point in the temperature range between 80 and 150°C and a melt viscosity in the range from 20 to 40 000 mPa·s, measured at 170°C.

6. The projectile trap composition as claimed in one or more of claims 1 to 4, wherein the metallocene polyolefin wax has a drop point in the temperature range between 85 and 115°C and a melt viscosity in the range from 100 to 7000 mPa·s, measured at 170°C.

7. The projectile trap composition as claimed in one or more of claims 1 to 6, further comprising other waxes, resins, antioxidants, light stabilizers, flame retardants, fillers, pigments and dyes.

8. The projectile trap composition as claimed in one or more of claims 1 to 7, wherein the metallocene polyolefin wax is at least partially functionalized, preferably by oxidation or by functionalization with alpha,beta-unsaturated carboxylic acids.

9. The projectile trap composition as claimed in one or more of claims 1 to 8, wherein the metallocene polyolefin wax is at least partially grafted with maleic anhydride.

10. The projectile trap composition as claimed in one or more of claims 1 to 9, wherein the metallocene polyolefin wax is at least partially crosslinked via functional groups.

11. The use of a projectile trap composition as claimed in one or more of claims 1 to 10 as a front disk in bullet-trapping systems or as a safety construction against ricochets, including ricochets in the direction of the shooter.

12. The use as claimed in claim 11 as a trapping material for fired projectiles which has improved ability to retain harmful materials.

13. The use as claimed in claim 11 or 12 as a material for completely stopping fired projectiles in the rearward region of bullet-trapping systems.

14. A method of recycling a projectile trap composition as claimed in one or more of claims 1 to 9, which comprises this composition being separated from the decelerated projectiles by slurrying in water or by melting and filtering and being reusable in bullet-trapping systems.

## Revendications

1. Composition pour piège à balles, pour intercepter des projectiles, contenant de 10 à 100 % en poids de cire de métallocène-polyoléfine, par rapport au poids total de la composition pour piège à balles.

2. Composition pour piège à balles selon la revendication 1, **caractérisée en ce que** la cire de métallocène-polyoléfine est un homopolymère du propylène ou un copolymère du propylène et de l'éthylène, ou d'une ou plusieurs 1-oléfines ayant 4 à 18 atomes de carbone.

3. Composition pour piège à balles selon la revendication 1 ou 2, **caractérisée en ce qu'**elle contient en outre une quantité de 0 à 90 % en poids d'additifs et d'adjuvants.

4. Composition pour piège à balles selon l'une ou plusieurs des revendications 1 à 3, **caractérisée en ce qu'**elle contient de la cire de métallocène-polyoléfine en une quantité comprise dans la plage de 90 à 100 % en poids.

5. Composition pour piège à balles selon l'une ou plusieurs des revendications 1 à 4, **caractérisée en ce que** la cire de métallocène-polyoléfine présente un point de goutte compris dans la plage de températures de 80 à 150°C et une viscosité à l'état fondu comprise dans la plage de 20 à 40 000 mPa.s, mesurée à 170°C.

6. Composition pour piège à balles selon l'une ou plusieurs des revendications 1 à 5, **caractérisée en ce que** la cire de métallocène-polyoléfine présente un point de goutte compris dans la plage de températures de 85 à 115°C et une viscosité à l'état fondu comprise dans la plage de 100 à 7 000 mPa.s, mesurée à 170°C.

7. Composition pour piège à balles selon l'une ou plusieurs des revendications 1 à 6, **caractérisée en ce qu'**elle contient en outre d'autres cires, des résines, des antioxydants, des agents de protection contre la lumière, des agents d'ignifugation, des matières de charge, des pigments et des colorants.

8. Composition pour piège à balles selon l'une ou plusieurs des revendications 1 à 7, **caractérisée en ce que** la cire de métallocène-polyoléfine est au moins partiellement fonctionnalisée, de préférence par oxydation ou par fonctionnalisation avec des acides carboxyliques alpha,bêta-insaturés.

9. Composition pour piège à balles selon l'une ou plusieurs des revendications 1 à 8, **caractérisée en ce que** la cire de métallocène-polyoléfine est au moins partiellement greffée par de l'anhydride maléique.

10. Composition pour piège à balles selon l'une ou plusieurs des revendications 1 à 9, **caractérisée en ce que** la cire de métallocène-polyoléfine est au moins partiellement réticulée par l'intermédiaire de groupes fonctionnels.

11. Utilisation d'une composition pour piège à balles selon l'une ou plusieurs des revendications 1 à 10 en tant que plaque frontale dans des systèmes de piège à balles, ou en tant que structure de sécurité vis-à-vis des rebonds et des ricochets.

12. Utilisation selon la revendication 11 en tant que matériau d'interception de projectiles présentant une capacité améliorée de rétention de substances toxiques.

13. Utilisation selon la revendication 11 ou 12 en tant que matériau pour l'arrêt complet de projectiles dans la zone arrière de systèmes de piège à balles.

14. Procédé de recyclage d'une composition pour piège à balles selon l'une ou plusieurs des revendications 1 à 9, **caractérisé en ce qu'**on la sépare des projectiles freinés, par mise en suspension dans de l'eau ou par fusion et filtration, et qu'on peut la réutiliser dans des systèmes de piège à balles.
